(19) Europäisches Patentamt
European Patent Office
Office européen des brevets

(11) **EP 2 073 469 A2**

(12) **EUROPEAN PATENT APPLICATION**

(43) Date of publication:
**24.06.2009   Bulletin 2009/26**

(51) Int Cl.:
**H04L 25/02** *(2006.01)*

(21) Application number: **08162347.2**

(22) Date of filing: **14.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.12.2007   KR 20070132623**

(71) Applicant: **Electronics and Telecommunications Research Institute**
**Yuseong-gu**
**Daejon 305-350 (KR)**

(72) Inventors:
• **Kim, Byoung-Gi**
**Yuseong-gu, Daejeon (KR)**
• **Kang, Kun Seok**
**Daejeon (KR)**
• **Ahn, Do-Seob**
**Daejeon (KR)**
• **Lee, Ho Jin**
**Yuseong-gu, Daejeon (KR)**

(74) Representative: **Betten & Resch**
**Patentanwälte**
**Theatinerstrasse 8**
**(Fünf Höfe)**
**80333 München (DE)**

(54) **Interference cancellation method for use in mobile communication system**

(57)     A transmitter receives feedback information from a receiver, and estimates a channel environment of a radio channel on the basis of the feedback information. Then, the transmitter generates a frequency multiplexing signal by use of a modulation method according to the channel environment, and transmits the generated frequency multiplexing signal. In this way, it is possible to cancel inter-carrier interference.

FIG. 2

**Description**

**BACKGROUND OF THE INVENTION**

**(a) Field of the Invention**

The present invention relates to an inference cancellation method for use in a mobile communication system. In particular, the present invention relates to an inter-carrier interference cancellation method for use in a mobile communication system.

This invention was supported by the IT R&D program of MIC/IITA [2005-S-014-03, Satellite IMT2000+ Technique Development].

**(b) Description of the Related Art**

Orthogonal frequency division multiplexing (hereinafter referred to as "OFDM") modulation is a modulation method that is adequate for high-rate data transmission. The OFDM modulation method extends durations of symbols and transmits the symbols, and is thus effective for a multipath channel where delay spread may occur. Further, the OFDM modulation method performs the transmission so that the spectra of a plurality of subcarriers overlap each other, and is thus excellent in terms of band efficiency.

However, in a system adapting the OFDM modulation method, a frequency offset may result from a carrier frequency difference. The frequency offset may occur due to an oscillation frequency difference between a transmitter and a receiver or a Doppler shift by a time-varying characteristic of a channel.

The frequency offset may cause inter-carrier interference (hereinafter referred to as "ICI"), which may destroy orthogonality among neighboring subcarriers and may degrade the performance of the entire system.

The above information disclosed in this Background section is only for enhancement of understanding of the background of the invention and therefore it may contain information that does not form the prior art that is already known in this country to a person of ordinary skill in the art.

**SUMMARY OF THE INVENTION**

The present invention has been made in an effort to provide an inter-carrier interference cancellation method.

An exemplary embodiment of the present invention provides a method of canceling interference of adjacent carriers on a signal transmitted through a radio channel, the method including: transmitting a control signal including a plurality of symbols through the radio channel; receiving feedback information corresponding to the control signal; estimating a channel environment of the radio channel on the basis of the feedback information; generating a frequency multiplexing signal by use of a modulation method corresponding to the channel environment; and transmitting the frequency multiplexing signal.

In this embodiment, the feedback information may include channel environment information including coherence time and signal-to-noise ratio (SNR) information.

In the generating of the frequency multiplexing signal, if coherence time is larger than a symbol duration of each of the plurality of symbols, the frequency multiplexing signal may be generated by use of a first modulation method and a modulation code.

The first modulation method may be a modulation method according to which a modulated signal is displayed as four or more constellations on a constellation diagram, and the modulation code may correspond to a modulation code acquired by transforming a spatial-temporal code.

Alternatively, in the generating of the frequency multiplexing signal, if the coherence time is smaller than a symbol duration of each of the plurality of symbols, the frequency multiplexing signal may be generated by a first modulation method.

The first modulation method may be a modulation method according to which a modulated signal is displayed as three or less constellations on a constellation diagram, and in the generating of the frequency multiplexing signal, the frequency multiplexing signal may be generated by a self-interference cancellation method.

Another embodiment of the present invention provides a method of canceling interference of adjacent carriers on a signal transmitted through a radio channel, the method including: transmitting control signals through the radio channel at intervals of a predetermined amount of time a plurality of times; receiving a first channel quality indicator corresponding to a first control signal; generating a first frequency multiplexing signal by use of a modulation method corresponding to the first channel quality indicator; determining whether a predetermined amount of time has elapsed; if the predetermined amount of time has elapsed, receiving a second channel quality indicator corresponding to a second control signal; and generating a second frequency multiplexing signal by use of a modulation method corresponding to the second channel quality indicator.

This method may further include generating a third frequency multiplexing signal by use of a modulation code and a modulation method corresponding to the first channel quality indicator if the predetermined amount of time has not elapsed.

In this embodiment, the first channel quality indicator may include coherence time corresponding to the first control signal, and the generating of the first frequency multiplexing signal may include estimating channel environment of the radio channel on the basis of the coherence time and generating the first frequency multiplexing signal by a modulation method corresponding to the channel environment.

In the generating of the first frequency multiplexing signal, the first frequency multiplexing signal is generated by use of a first modulation method if the coherence time is larger than a threshold value.

The first modulation method may be a modulation method according to which a modulated signal is displayed as four or more constellations on a constellation diagram.

Alternatively, in the generating of the first frequency multiplexing signal, the first frequency multiplexing signal may be generated by use of a first modulation method if the coherence time is smaller than a threshold value.

The first modulation method may be a modulation method according to which a modulated signal is displayed as three or less constellations on a constellation diagram.

According to embodiments of the present invention, it is possible to reduce the frequency offset according to the channel environment, resulting in inter-carrier interference cancellation.

## BRIEF DESCRIPTION OF THE DRAWINGS

FIG. 1 is a drawing illustrating a mobile communication system according to an exemplary embodiment of the present invention.

FIG. 2 is a drawing illustrating an interference cancellation method according to an exemplary embodiment of the present invention.

## DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, unless explicitly described to the contrary, the word "comprise" and variations such as "comprises" or "comprising" will be understood to imply the inclusion of stated elements but not the exclusion of any other elements. In addition, the terms "-er", "-or" and "module" described in the specification mean units for processing at least one function and operation, and can be implemented by hardware components or software components and combinations thereof.

Now, an interference cancellation method for a mobile communication system according to an exemplary embodiment of the present invention will be described with reference to the accompanying drawings.

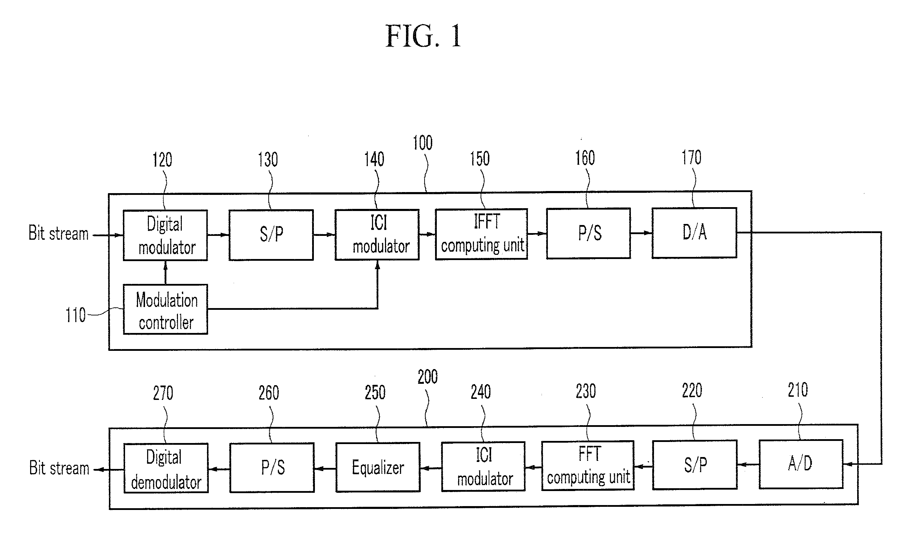

First, a mobile communication system according to an exemplary embodiment of the present invention will be described with reference to FIG. 1.

FIG. 1 is a drawing illustrating a mobile communication system according to an exemplary embodiment of the present invention.

As shown in FIG. 1, a transmitter 100 of a mobile communication system includes a modulation controller 110, a digital modulator 120, a serial-to-parallel converter (hereinafter referred to as "S/P") 130, an inter-carrier interference modulator (hereinafter referred to as "ICI modulator") 140, an inverse fast Fourier transform computing unit (hereinafter referred to as "IFFT computing unit") 150, a parallel-to-serial converter (hereinafter referred to as "P/S") 160, and a digital-to-analog converter (hereinafter referred to as "D/A") 170.

The modulation controller 110 controls the digital modulator 120 and the ICI modulator 140.

Specifically, the modulation controller 110 controls the digital modulator 120 to perform digital modulation on a bit stream input to the transmitter 100 and to output a plurality of modulation symbols. In this case, the bit stream includes a plurality of bits having been subjected to encoding using a predetermined encoding ratio and then interleaving. The digital modulator 120 may modulate the bit stream by use of one of various modulation schemes such as phase shift keying (hereinafter referred to as "PSK"), quandrature phase shift keying (hereinafter referred to as "QPSK"), quadrature amplitude modulation (hereinafter referred to as "QAM"), or binary phase shift keying (hereinafter referred to as "BPSK").

The S/P 130 receives a plurality of modulation symbols in series, and outputs them in parallel.

Further, the modulation controller 110 controls the ICI modulator 140 to apply a modulation code to the plurality of modulation symbols and to output a plurality of modulation code application symbols. In this case, the ICI modulator 140 may apply a modulation code obtained by transforming a spatial-temporal code and output a plurality of modulation code application symbols. The plurality of modulation code application symbols can be expressed by Equation 1.

(Equation 1)

$$\left( S_1 \quad -S_1^* \quad S_2 \quad S_2^* \quad \cdots \quad S_{\frac{N}{2}-1} \quad -S_{\frac{N}{2}-1}^* \quad S_{\frac{N}{2}} \quad S_{\frac{N}{2}}^* \right)$$

In Equation 1, $S_i$ represents an i-th symbol of an N-th subcarrier, and $(\ )^*$ represents the conjugate complex of a complex number.

The IFFT computing unit 150 computes the inverse fast Fourier transform (hereinafter referred to as "IFFT") of each of the plurality of modulation code application symbols and outputs a plurality of frequency division multiplexing symbols (hereinafter referred to as "OFDM symbols").

The P/S 160 receives the plurality of OFDM symbols in parallel and outputs them in series.

The D/A 170 converts the plurality of OFDM symbols, which correspond to a digital signal, into an analog OFDM signal and outputs the analog OFDM signal.

Then, the transmitter 100 transmits the OFDM signal to a receiver 200 through a radio channel.

The receiver 200 of the mobile communication system receives the OFDM signal from the transmitter 100 through the radio channel, and includes an analog-to-digital converter (hereinafter referred to as "A/D") 210, an S/P 220, a fast Fourier transform computing unit (hereinafter referred to as "FFT computing unit") 230, an inter-carrier interference demodulator (hereinafter referred to as "ICI demodulator") 240, an equalizer 250, a P/S 260, and a digital demodulator 270.

The A/D 210 converts the analog OFDM signal into a digital signal, that is, a plurality of OFDM symbols, and outputs the plurality of OFDM symbols.

The S/P 220 receives the plurality of OFDM symbols in series and outputs them in parallel.

The FFT computing unit 230 computes the fast Fourier transform (hereinafter referred to as "FFT") of each of the plurality of OFDM symbols and outputs a plurality of symbols. The plurality of symbols can be expressed by Equation 2.

(Equation 2)

$$\begin{pmatrix} Y(o) \\ Y(e) \end{pmatrix} = \begin{pmatrix} S_i & S_{i+1} \\ -S_{i+1}^* & S_i^* \end{pmatrix} \begin{pmatrix} H(o) \\ H(e) \end{pmatrix} + \begin{pmatrix} n(o) \\ n(e) \end{pmatrix}$$

In Equation 2, $Y(o)$ represents an odd-numbered subcarrier signal, $Y(e)$ represents an even-numbered subcarrier signal, and $S_i$ represents an i-th symbol of an N-th subcarrier. Further, $(\ )^*$ represents the conjugate complex of a complex number, $H(o)$ represents a channel gain of an odd-numbered subcarrier, and $H(e)$ represents a channel gain of an even-numbered subcarrier. Furthermore, $n(o)$ represents a noise component of an odd-numbered subcarrier, and $n(e)$ represents a noise component of an even-numbered subcarrier.

The ICI demodulator 240 applies a demodulation code to the plurality of symbols and outputs a plurality of demodulation code application symbols. In this case, the ICI demodulator 240 may apply, to the plurality of symbols, a demodulation code corresponding to the modulation code that the ICI modulator 140 of the transmitter 100 has applied. The plurality of demodulation code application symbols can be expressed by Equation 3.

## (Equation 3)

$$\begin{pmatrix} S_i \\ S_{i+1} \end{pmatrix} = \begin{pmatrix} H^*(o) & H(e) \\ H^*(e) & -H(o) \end{pmatrix} \begin{pmatrix} Y(o) \\ Y(e) \end{pmatrix}$$

In Equation 3, $S_i$ represents an i-th symbol of an N-th subcarrier, $H(o)$ represents a channel gain of an odd-numbered subcarrier, and $H(e)$ represents a channel gain of an even-numbered subcarrier. Further, $(\ )^*$ represents the conjugate complex of a complex number, $Y(o)$ represents an odd-numbered subcarrier signal, and $Y(e)$ represents an even-numbered subcarrier signal.

The equalizer 250 compensates the plurality of demodulation code application symbols and outputs a plurality of compensation symbols. In this case, the equalizer 250 may compensate the plurality of demodulation code application symbols according to channel environment and a signal-to-noise ratio (hereinafter referred to as "SNR"), and may output a plurality of compensation symbols.

The P/S 260 receives the plurality of compensation symbols in parallel and outputs them in series.

The digital demodulator 270 performs digital demodulation on the plurality of compensation symbols and outputs a bit stream including a plurality of bits.

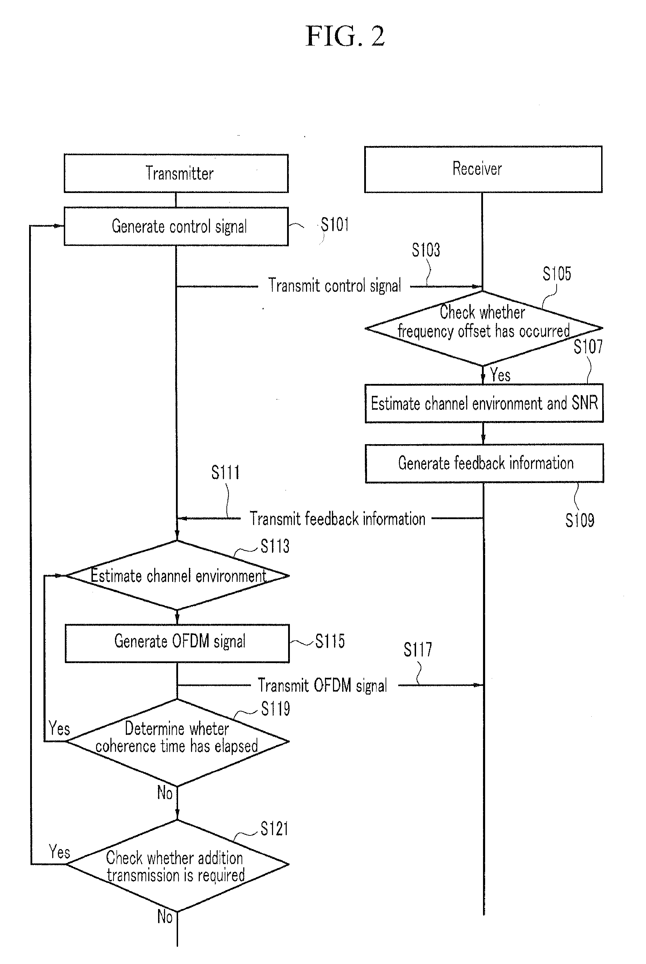

Next, an interference cancellation method for a mobile communication system according to an exemplary embodiment of the present invention will be described with reference to FIG. 2.

FIG. 2 is a drawing illustrating an interference cancellation method according to an exemplary embodiment of the present invention.

As shown in FIG. 2, first, the transmitter 100 generates a control signal for requesting feedback information required for inter-carrier interference cancellation (S101).

Next, the transmitter 100 transmits the control signal through a radio channel (S103).

Then, the receiver 200 receives the control signal through the radio channel and checks whether a frequency offset has occurred in the received control signal (S105).

If a frequency offset has occurred in the received control signal, the receiver 200 estimates channel environment and an SNR on the basis of the received control signal (S107).

Then, the receiver 200 generates feedback information including a channel quality indicator (hereinafter referred to as "CQI") that corresponds to the estimated channel environment and SNR (S109). The feedback information may include coherence time. The coherence time can be expressed by Equation 4.

## (Equation 4)

$$T = 1/(v \times f\_c / c)$$

In Equation 4, $T$ represents coherence time, $v$ represents a speed of a mobile object, $f\_c$ represents a carrier frequency, and c represents the speed of light.

Next, the receiver 200 transmits the feedback information to the transmitter 100 through the radio channel (S111).

The transmitter 100 and the receiver 200 may repeat steps S101 to S111 at predetermined time intervals.

Next, the transmitter 100 receives the feedback information from the receiver 200, and estimates the channel environment of the radio channel on the basis of the CQI of the received feedback information (S113). On this occasion, the transmitter 100 compares the coherence time with a symbol duration. If the coherence time is larger than the symbol duration, the transmitter 100 may determine that the channel changes slowly. If the symbol duration is larger than the coherence time, the transmitter 100 may determine that the channel changes rapidly.

If the radio channel changes slowly, the transmitter 100 generates an OFDM signal by use of a high-order modulation method and a modulation code acquired by transforming a spatial-temporal code (S115). On this occasion, the transmitter 100 may generate an OFDM signal by use of an 8-PSK method or a QAM method. A slow change of the radio channel means that the Doppler effect, which is influenced by the speed, is smaller.

Next, the transmitter 100 transmits the OFDM signal to the receiver 200 through the channel (S117).

Sequentially, the transmitter 100 determines whether the coherence time has elapsed (S119).

If the coherence time has not elapsed, the transmitter 100 checks whether there is additional transmission (S121).

If additional transmission is required, the transmitter 100 generates a control signal again, and repeats the processes starting with step 101 of generating a control signal.

Meanwhile, if the radio channel changes rapidly, the transmitter 100 generates an OFDM signal by use of a self-interference cancellation method (hereinafter referred to "SC method") insensitive to a bit error rate (hereinafter referred to as "BER"). A carrier to interference ratio (hereinafter referred to as "CIR") of the SC method can be expressed by Equation 5.

(Equation 5)

$$CIR = \frac{\left|-S(-1) + 2S(0) - S(1)\right|^2}{\displaystyle\sum_{l=even}^{N-1} \left|-S(l-1) + 2S(l) - S(l+1)\right|^2}$$

In Equation 5, $S(l)$ represents a correlation coefficient acting on an I-th subcarrier as interference.

Alternatively, the transmitter 100 may generate an OFDM signal by use of a low-order modulation method such as BPSK.

Here, rapid change of the radio channel means that the speed is high, and thus the Doppler effect is large during the symbol duration.

Meanwhile, if the coherence time has elapsed, the transmitter 100 estimates the channel environment, and repeats the processes starting with step S113 of estimating the channel environment.

The above-described exemplary embodiments of the present invention can be applied to programs that allow computers to execute functions corresponding to the configurations of the exemplary embodiments of the invention or recording media including the programs as well as the method and apparatus. Those skilled in the art can easily implement the applications from the above-described exemplary embodiments of the present invention.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

**Claims**

1. A method of canceling interference of adjacent carriers on a signal transmitted through a radio channel, the method comprising:

   transmitting a control signal including a plurality of symbols through the radio channel;
   receiving feedback information corresponding to the control signal;
   estimating a channel environment of the radio channel on the basis of the feedback information;
   generating a frequency multiplexing signal by use of a modulation method corresponding to the channel environment; and
   transmitting the frequency multiplexing signal.

2. The method of claim 1, wherein
   the feedback information includes channel environment information including coherence time and signal-to-noise ratio (SNR) information.

3. The method of claim 2, wherein,
   in the generating of the frequency multiplexing signal,
   if the coherence time is larger than a symbol duration of each of the plurality of symbols, the frequency multiplexing signal is generated by use of a first modulation method and a modulation code.

4. The method of claim 3, wherein

the first modulation method is a modulation method according to which a modulated signal is displayed as four or more constellations on a constellation diagram, and
the modulation code corresponds to a modulation code acquired by transforming a spatial-temporal code.

5. The method of claim 2, wherein,
in the generating of the frequency multiplexing signal,
if the coherence time is smaller than a symbol duration of each of the plurality of symbols, the frequency multiplexing signal is generated by a first modulation method.

6. The method of claim 5, wherein
the first modulation method is a modulation method according to which a modulated signal is displayed as three or less constellations on a constellation diagram, and
in the generating of the frequency multiplexing signal, the frequency multiplexing signal is generated by a self-interference cancellation method.

7. A method of canceling interference of adjacent carriers on a signal transmitted through a radio channel, the method comprising:

transmitting control signals through the radio channel at intervals of a predetermined amount of time a plurality of times;
receiving a first channel quality indicator corresponding to a first control signal;
generating a first frequency multiplexing signal by use of a modulation method corresponding to the first channel quality indicator;
determining whether a predetermined amount of time has elapsed;
if the predetermined amount of time has elapsed, receiving a second channel quality indicator corresponding to a second control signal; and
generating a second frequency multiplexing signal by use of a modulation method corresponding to the second channel quality indicator.

8. The method of claim 7, further comprising,
if the predetermined amount of time has not elapsed, generating a third frequency multiplexing signal by use of a modulation code and a modulation method corresponding to the first channel quality indicator.

9. The method of claim 7 or 8, wherein
the first channel quality indicator includes coherence time corresponding to the first control signal, and
the generating of the first frequency multiplexing signal comprises:

estimating a channel environment of the radio channel on the basis of the coherence time; and
generating the first frequency multiplexing signal by a modulation method corresponding to the channel environment.

10. The method of claim 9, wherein,
in the generating of the first frequency multiplexing signal,
the first frequency multiplexing signal is generated by use of a first modulation method if the coherence time is larger than a threshold value.

11. The method of claim 10, wherein
the first modulation method is a modulation method according to which a modulated signal is displayed as four or more constellations on a constellation diagram.

12. The method of claim 9, wherein,
in the generating of the first frequency multiplexing signal,
the first frequency multiplexing signal is generated by use of a first modulation method if the coherence time is smaller than a threshold value.

13. The method of claim 12, wherein
the first modulation method is a modulation method according to which a modulated signal is displayed as three or less constellations on a constellation diagram.

## FIG. 1

Transmitter (100):
Bit stream → Digital modulator (120) → S/P (130) → ICI modulator (140) → IFFT computing unit (150) → P/S (160) → D/A (170)

Modulation controller (110) → Digital modulator (120); → ICI modulator (140)

Receiver (200):
A/D (210) → S/P (220) → FFT computing unit (230) → ICI modulator (240) → Equalizer (250) → P/S (260) → Digital demodulator (270) → Bit stream

8

# FIG. 2

| Transmitter | | Receiver |
|---|---|---|

Generate control signal ~ S101

— Transmit control signal — S103 →

S105
Check whether frequency offset has occurred

S107
Yes

Estimate channel environment and SNR

Generate feedback information

S111
← — Transmit feedback information — S109

S113
Estimate channel environment

Generate OFDM signal ~S115

S117
— Transmit OFDM signal — →

S119
Yes — Determine wheter coherence time has elapsed

No

S121
Yes — Check whether addition transmission is required

No